# EUROPEAN PATENT APPLICATION

(11) **EP 1 376 171 A1**
(43) Date of publication of application: **02.01.2004**
(21) Application number: 02360178.4
(22) Date of filing: 18.06.2002
(51) Int. Cl.: G02B 6/124, G02B 6/293, G02F 1/01, G02F 1/29

(54) **Optical device for reducing temperature related shift**

(71) Applicant: Avanex Corporation, Fremont, CA 94538 (US)
(72) Inventor: Satzke, Klaus Dr., 71732 Tamm (DE)
(74) Representative: Haines, Miles John

(57) **Abstract**

The present invention relates to a temperature-compensating optical device with a design that allows the mount of a support device (2) that is able to apply strain solely along the arrayed waveguides propagation direction, thus avoiding the introduction of additional waveguide birefringence by the symmetry of the applied strain. An AWG device is mounted on a specially designed device introducing the suitable amount of mechanical strain required for temperature drift compensation, but avoiding introducing strain perpendicular to the propagation direction with the AWG due to its special symmetry of the strain field. Upward or downward AWG chip (3) bending can be avoided by a cover placed on top of the arrangement. For tuning purposes, the strain introduced by the mount can be tuned by a constant amount for adjustment of the AWG passband frequencies to the ITU grid. Using other kinds of linear actuators, a tuneable integrated-optical filter can be realised.

## Description

### BACKGROUND OF THE INVENTION

Generally speaking, optical wavelength multiplexing and demultiplexing have been accomplished in the past by using an interconnection apparatus having a plurality of closely spaced input waveguides communicating with the input of a star coupler. The output of the star coupler communicates with an optical grating comprising a series of optical waveguides, each of the waveguides differing in length with respect to its nearest neighbor by a predetermined amount. The grating is connected to the input of a second star coupler, the outputs of which form the outputs of the switching, multiplexing, and demultiplexing apparatus.

The geometry of such an interconnection apparatus may be such that a plurality of separate and distinct wavelengths each launched into a separate and distinct input port of the apparatus will all combine and appear on a predetermined one of the output ports. In this manner, the apparatus performs a multiplexing function. The same apparatus may also perform a demultiplexing function. In this situation, an input wavelength is separated from the others and directed to a predetermined one of the output ports of the apparatus. An appropriate selection of input wavelength also permits switching between any selected input port to any selected output port.

Accordingly, these devices are generally referred to as frequency routing devices and more specifically wavelength division multiplexers (WDM).

Ideally, the operation of these AWG and WDM optical devices should by predictable and consistent over a wide range of environmental conditions. Unfortunately however, in practice, the operational performance of such devices is significantly affected by variations in the temperature of the environment surrounding the device.

More specifically, the wavelength spectrum of existing AWG designs shifts with temperature (T) for at least two reasons. First, where n represents the refractive index of the waveguide material, dn/dT ≠0 and secondly, the thermal expansion, i.e. dL/dT, where L represents length, likewise does not equal zero.

To date, some of the techniques used to create optical devices that are less sensitive to temperature changes have included using a heater with a temperature controller to stabilize the wavelength spectrum of the AWG. Unfortunately, such a design is expensive and impractical in applications where electrical power is not readily available. In addition, the semiconductor art has demonstrated a temperature insensitive semiconductor AWG that includes a waveguide region with different dn/dT.

However, even in light of the technical advances mentioned above, there remains a definite need for a practical design and method for making optical waveguide filtering devices temperature independent. This is particularly true for compensating waveguide grating routers, which are, at present, the multiplexers of choice for dense WDM systems. Furthermore, given that silicon optical bench routers are now components of various Next Generation Lightwave Networks (NGLN) and are planned for use in Fiber-to-the-Home (FTTH) access networks, temperature-compensating optical devices like AWGs are highly desirable for these networks.
In the US 6 137 939 a design is proposed where a portion of the length of at least one waveguide within the optical device is modified in a way that stabilizes the wavelength spectrum passing therethough. The solution is to fill an elastomer material in either several blocks incorporated in the selected waveguides or to incorporate a wedge filled with the said elastomer material.

Using this structures for the AWG you face some problems:
- Silica waveguides have to be interrupted, resulting in reliability problems at the interfaces.
- Critical interfaces between silica waveguides and polymer material results in increased loss.
- Free-space propagation in the inserted polymer material results in enhanced loss due mode-mismatch at the receiving polymer/silica interface.
- Post-processing steps required for polymer insertion results in increased complexity of the fabrication process.

Another solution is to influence the AWG with mechanical means. One way for temperature compensation is the input coupling of light through a movable coupler device. This increases the complexity of the device and decrease the mechanical stability of the whole optical circuit.

Temperature compensation by application of mechanical strain to silica base components by mounting the AWG chip to a substrate with suitable expansion coefficent has also been demonstrated to influence the thermal behavior. Here strain is generally applied perpendicular to the propagating direction of the light which influences the birefringence of the waveguide circuit.

### SUMMARY OF THE INVENTION

The present invention relates to a temperature-compensating optical device with a design that allows the mount of a support device that is able to apply strain solely along the arrayed waveguides' propagation direction, thus avoiding the introduction of additional waveguide birefringence by the symmetry of the applied strain.

In order to allow for a suitably formed stress field of the described symmetry, at least a part of the chip where the waveguide grating is located must be suiably formed to match the support device, i.e. it requires curved chip edges. Solutions for cutting or dicing silica-based AWG wavers along curved lines are now commercially available, e.g. based on UV laser micro-machining.

The invention uses deformation of the grating part of an AWG chip for reduction of its temperature drift without degrading other performance parameters of the AWG chip, such as loss, crosstalk, and polarisation dependence of transmission. For this purpose, the AWG device is mounted on a specially designed device. The mount introduces the suitable amount of mechanical strain required for temperature drift compensation, but avoiding the introducing strain perpendicular to the propagation direction with the gratings waveguides due to its special symmetry of the strain field. Upward or downward AWG chip bending can be avoided by a cover placed on top of the arrangement.
For tuning purposes, the strain introduced by the mount can be tuned by a constant amount for adjustment of the AWG passband frequencies to the ITU grid. Using other kinds of linear actuators (i.e. mechanical, electro-mechanical, piezoelectrical devices), a tuneable integrated-optical filter can be realised.

### SHORT DESCRIPTION OF THE DRAWINGS

The invention is shown in examples in the figures and described in the description after.

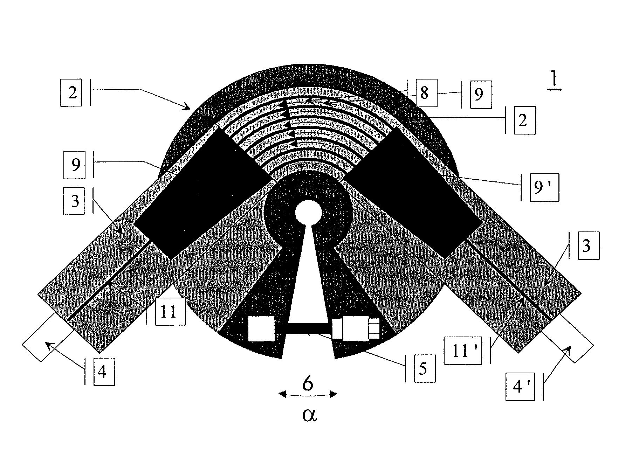

Fig. 1 shows a AWG chip 3 which is mounted on a support device 2. The AWG chip 3 comprises a first fibre coupler 4 connected to the AWG chip 3. The waveguide 11 is connected to a first star coupler 9. The star coupler 9 is linked via a couple of waveguides 8 to a second star coupler 9 and a second waveguide 11. The waveguides 8 follows the radi of a circle. The support device 2 has a switched opening 6 which is opened by an angel α. The opening is on both sides contacted by an actuator device 5. The AWG chip 3 can be designed in different materials as a integrated silica waveguide circuit, or semiconductor design in silicon-on-insulator (SOI) or indium phosphide (InP).
The support device 2 consists of a metal plate. The fixation of the AWG chip 3 on the support device 2 is done by glueing, soldering or welding the chip to the support device. The AWG chip is fixed on the whole surface or selectively at solution for the invention. Each form which allow to apply a train along the curved waveguide 8 can be used by the man skilled in the art. As other examples U-shaped support or a S-shaped support is possible to apply the requested strain. To avoid problems with the AWG chip bending towards or upwards the structure a cover plate is fixed on the top of the device 1.

## Claims

1. An optical device comprising
a first free space region having at least one input waveguide;
a second free space region having at least one output waveguide;
a plurality of unequal length waveguides connecting the first free space region to the second free space region, wherein the unequal length waveguides is defined by a core region capable of transmitting light energy, the core region being surrounded by a cladding that essentially confines the light energy,
the optical device is mounted on a support device with means to apply mechanical stress to the support device and to the unequal length waveguides along each of them.

2. An optical device according claim 1 where the support device is circular shaped with a radial open wedge where the two sides of the open wedge are connected by a actuator.
